# EUROPÄISCHE PATENTSCHRIFT

(11) **EP 3 396 154 B1**
(45) Veröffentlichungstag und Bekanntmachung des Hinweises auf die Patenterteilung: **01.06.2022**
(21) Anmeldenummer: 18169535.4
(22) Anmeldetag: 26.04.2018
(51) Int. Cl.: F03D 1/06

(54) **BLATTADAPTER FÜR WINDENERGIEANLAGEN**
BLADE ADAPTER FOR WIND TURBINES
ADAPTATEUR DE PALE POUR ÉOLIENNES

(30) Priorität: 27.04.2017 DE 102017004056
(43) Veröffentlichungstag der Anmeldung: 31.10.2018
(73) Patentinhaber: Siemens Gamesa Renewable Energy Service GmbH, 20097 Hamburg (DE)
(72) Erfinder: TREDE, Alf, 25885 Immenstedt (DE)
(74) Vertreter: Glawe, Delfs, Moll

(56) Entgegenhaltungen:
- DE-A1- 10 140 793
- DE-U1-202005 007 450
- US-A- 4 236 873
- US-A1- 2007 231 137
- US-A1- 2011 293 417

## Beschreibung

Die Erfindung betrifft eine Windenergieanlage mit Blattadaptern für Rotorblätter von Windenergieanlagen zur Vergrößerung des Rotordurchmessers.

Windenergieanlagen sind aus dem Stand der Technik bekannt. Sie umfassen in der Regel einen Rotor, der drehbar um eine im Wesentlichen horizontale Achse an einer Gondel angeordnet ist, wobei die Gondel um eine vertikale Achse drehbar auf einem Turm angeordnet ist. Der Rotor treibt ggf. über eine Rotorwelle und ein Getriebe einen Generator an. Eine durch Wind induzierte Rotationsbewegung des Rotors kann so in elektrische Energie gewandelt werden, die dann über Umrichter und/oder Transformatoren - je nach Bauart des Generators auch wenigstens teilweise direkt - in ein elektrisches Netz eingespeist werden kann. Der Rotor umfasst mehrere (in der Regel drei), sich im Wesentlichen radial von der Rotorachse erstreckende Rotorblätter. Die Rotorblätter sind dabei häufig derart drehbar an einer Rotornabe befestigt, dass der Anstellwinkel der Rotorblätter verändert werden kann.

Die von einer Windenergieanlage erzeugbare elektrische Energie steht im unmittelbaren Zusammenhang mit der von dem Rotor überstrichenden Fläche, die sich wiederum unmittelbar aus der Länge der Rotorblätter ergibt. Die Länge der Rotorblätter ist jedoch neben fertigungstechnischen Herausforderungen insbesondere durch die erforderliche Transportfähigkeit der Rotorblätter begrenzt. Sowohl für den Transport über Land für On-Shore-Windenergieanlagen als auch über Wasser bei Off-Shore-Windenergieanlagen bestehen aus der Logistik herrührende Einschränkungen für die maximale Länge von Rotorblättern.

Im Stand der Technik, wie bspw. der GB 2 517 935 A, sind daher sog. "Flügel-Extender" bekannt, die zwischen der Rotornabe und den eigentlichen Rotorblättern angeordnet werden, um die von dem Rotor überstrichene Fläche zu vergrößern. Diese Flügel-Extender machen sich die Beobachtung zu Nutze, dass selbst bei rohrförmiger und somit kein zusätzliches Rotormoment erzeugender Formgebung der Flügel-Extender die Ausbeute einer Windenergieanlage insgesamt erhöht werden kann. Andere Flügel-Extender, die zusätzlich noch die Lage der Rotorblätter gegenüber der Rotornabe verändern, sind bspw. in der WO 03/060319 A1 und der US 2013/0330194 A1 offenbart.

Bei genauerer Untersuchung der aus dem Stand der Technik bekannten Flügel-Extender hat sich jedoch gezeigt, dass bei Verwendung entsprechender Extender die auf die Rotornabe und insbesondere die für die Drehung der Rotorblätter um ihre jeweilige Rotorachse vorgesehenen Lager einwirkenden Kräfte erhöht und über den Umfang des Rotorblattlagers häufig ungleich verteilt sind. In der Folge besteht die Gefahr eines erhöhten Verschleißes oder einer Beschädigung des Rotorblattlagers. Um dem vorzubeugen, kann das Rotorblattlager gegenüber einer Verwendung ohne Flügel-Extender grundsätzlich verstärkt werden, was jedoch regelmäßig mit erhöhten Kosten und erhöhtem Gewicht verbunden ist.

Weiterhin offenbart DE 101 40 793 A1 einen Blattadapter für Rotorblätter in dem die Verstelleinrichtung integriert ist, über den aber auch eine Vergrößerung des Rotordurchmessers reicht wird. Der bekannte Blattadapter ist mit seinem ersten Ende mit der Rotornabe und seinem in axialer Richtung beabstandeten zweiten Ende mit der Blattwurzel des Rotorblatts verbunden. Weiterhin ist die sich in axialer Richtung erstreckende Wand des Blattadapters vom ersten Ende hin zum zweiten Ende in wenigstens einem Abschnitt kegelstumpfförmig nach außen hin öffnend ausgebildet.

US 2007/0231137 A1 offenbart ebenfalls ein Blattadapter mit einem sich nach außen kegelstumpfförmig öffnenden Abschnitt. Der bekannte Blattadapter ist an seinem ersten Ende über ein Wälzlager mit der Rotornabe und mit seinem zweiten Ende direkt mit der Blattwurzel des Rotorblattes verbunden.

Ähnliches ist in US 2011/0293417 A1 offenbart. Auch hier ist zwischen der Rotornabe und dem Rotorblatt ein Blattadapter mit einem sich nach außen kegelstumpfförmig öffnenden Abschnitt vorgesehen, wobei der Blattadapter direkt mit der Blattwurzel des Rotorblattes verbunden ist und indirekt über ein Wälzlager mit der Rotornabe.

Weiterer Stand der Technik ist in US 4236873 A offenbart.

Aufgabe der vorliegenden Erfindung ist es, eine Windenergieanlage mit Blattadaptern für Rotorblätter von Windenergieanlagen zur Vergrößerung des Rotordurchmessers zu schaffen, bei der die Nachteile aus dem Stand der Technik nicht mehr oder nur noch in vermindertem Umfang auftreten.

Gelöst wird diese Aufgabe durch eine Windenergieanlage gemäß dem Hauptanspruch. Vorteilhafte Weiterbildungen sind Gegenstand der abhängigen Ansprüche.

Demnach betrifft die Erfindung Windenergieanlage mit einem um eine im Wesentlichen horizontalen Achse drehbaren Rotor umfassend wenigstens zwei an einer Rotornabe befestigten Rotorblättern, wobei zwischen Rotornabe und den einzelnen Rotorblättern jeweils ein Blattadapter für Rotorblätter von Windenergieanlagen zur Vergrößerung des Rotordurchmessers vorgesehen ist, mit einem ersten Ende zur Befestigung an der Rotornabe und einem in axialer Richtung beabstandeten zweiten Ende zur Verbindung mit der Blattwurzel eines Rotorblatts, wobei der Blattadapter an seinem ersten und zweiten Ende jeweils einen Lochkreis zur Verbindung mit der Rotornabe oder dem Rotorblatt aufweist, und die in axialer Richtung erstreckende Wand des Blattadapters vom ersten Ende hin zum zweiten Ende in wenigstens einem Abschnitt kegelstumpfförmig nach außen hin öffnend ist, wobei die Wand des Blattadapters derart ausgestaltet ist, dass die sich in axialer Richtung erstreckende Wand des Blattadapters am ersten Ende innerhalb des Lochkreises am ersten Ende und am zweiten Ende außerhalb des Lochkreises am zweiten Ende verläuft, wobei der Querschnitt durch den Blattadapter eine Z-ähnliche Form mit der Wand des Blattadapters und den beiden Lochkreisen aufweist, wobei die Lochkreise auf mit der Wand des Blattadapters fest verbundener L-Flansche angeordnet sind, und wobei der Blattadapter hohl ist und eine über den Lochkreis am zweiten Ende hergestellte Verbin dung zwischen Rotorblatt und Blattadapter vom Innern der Rotornabe aus zugänglich ist.

Zunächst werden einige in Zusammenhang mit der Erfindung verwendete Begriffe erläutert.

Mit "Lochkreis" ist eine kreisförmige Anordnung von Bohrungen bezeichnet, die der Herstellung einer Schraubverbindung dienen. Die Bohrbilder der mit Schrauben zu verbindenden Teile müssen im Wesentlichen übereinstimmen, sodass Schrauben oder Bolzen durch die Bohrungen des Lochkreises an einem ersten Bauteil auch in oder durch entsprechende Bohrungen an einem zweiten Bauteil geführt werden können. Neben der Ausgestaltung der einzelnen Bohrungen, bspw. hinsichtlich des Bohrdurchmessers, ist auch die Anordnung der Bohrungen im Lochkreis elementar. Regelmäßig müssen hierzu der Durchmesser des Lochkreises, die Anzahl der Bohrungen und die Stellung der Bohrungen angegeben sein.

Erfindungsgemäß weitet sich die Wand des grundsätzlich hohl ausgeführten Blattadapters in wenigstens einem Abschnitt kegelstumpfförmig in Richtung des für den Anschluss des Rotorblatts vorgesehenen Endes. Es hat sich gezeigt, dass durch eine entsprechende Form für die Krafteinleitung von Gewichts- und Windkräften von den Rotorblättern auf die Rotornabe vorteilhaft ist, insbesondere im Hinblick auf eine gleichmäßige Verteilung der Belastung über den Umfang des Blattadapters und damit auf eine gleichmäßige Krafteinleitung in das Rotorblattlager. Es ist bevorzugt, wenn der dem ersten Ende nächstliegende Abschnitt der Wand des Blattadapters kegelstumpfförmig ausgestaltet ist.

In den Abschnitten, in denen sich die Wand nicht kegelstumpfförmig in Richtung des für den Anschluss des Rotorblatts vorgesehenen Endes weitet, kann die Wand beliebig ausgestaltet sein. Insbesondere kann sie in diesen Abschnitten zylindrisch und/oder in Richtung des für den Anschluss des Rotorblatts vorgesehenen Endes konisch nach innen verlaufen, also letztendlich entgegengesetzt zu dem erfindungsgemäß zwingend vorgesehenen kegelstumpfförmigen Abschnitt. Letzteres kann besonders günstig für eine Herstellung des Blattadapters als Gussbauteil sein, insbesondere wenn der Konuswinkel wenigstens 0,5° beträgt, was die Entformung begünstigen kann.

Es ist weiter bevorzugt, einen Abschnitt in der Nähe des zweiten Endes des Blattadapters im Wesentlichen zylindrisch oder konisch nach innen verlaufend zu gestalten. Dadurch kann die Montage von Verbindungsmittel, insbesondere Bolzen, in einem gegenüber der Wand innenliegenden Lochkreis am zweiten Ende vereinfacht werden, indem die Verbindungsmittel und Montagewerkzeug problemlos vom Inneren des Blattadapters aus ansetzbar sind.

Es ist bevorzugt, wenn die Gesamtlänge der kegelstumpfförmigen Abschnitte, in denen die Wand des Blattadapters nach außen hin öffnend ist, größer oder gleich der Gesamtlänge der übrigen Abschnitte ist. Mit Gesamtlänge ist in diesem Zusammenhang die summierte Länge der jeweiligen Abschnitte in axialer Richtung bezeichnet. Indem der Blattadapter über seine Länge gesehen also zu mindestens 50% kegelstumpfförmig zum zweiten Ende hin öffnend ausgebildet ist, wird die Steifigkeit des Blattadapters im Hinblick auf die zu erwartenden darauf einwirkenden Kräfte erhöht, was die Verteilung der Belastung über den Umfang des Blattadapters weiter vergleichmäßigt. Es ist auch möglich, dass die Gesamtlänge der kegelstumpfförmigen Abschnitte 100% der Länge des Blattadapters entspricht.

Es ist bevorzugt, wenn die beiden Lochkreises einen identischen Durchmesser aufweisen. Es ist weiter bevorzugt, wenn die beiden Lochkreises des Blattadapters einen identischen Durchmesser der Bohrungen, eine identische Anzahl der Bohrungen und/oder eine identische Stellung der Bohrungen aufweisen. Durch eine entsprechende Ausgestaltung der beiden Lochkreise wird ermöglicht, Rotorblätter grundsätzlich wahlweise mit oder ohne Blattadapter mit der Rotornabe zu verbinden. Sind die beiden Lochkreise des Blattadapters nämlich weitestgehend identisch, lässt sich ein mit dem zweiten Ende des Blattadapters verbindbares Rotorblatt ohne weiteres auch unmittelbar und ohne Blattadapter mit der Rotornabe verbinden, sofern die Rotornabe zur Verbindung mit dem ersten Ende des Blattadapters ausgebildet ist.

In der erfindungsgemäßen Ausführung ist die Wand des Blattadapters derart ausgestaltet, dass die sich in axialer Richtung erstreckende Wand des Blattadapters am ersten Ende innerhalb des Lochkreises am ersten Ende und am zweiten Ende außerhalb des Lochkreises am zweiten Ende verläuft. Indem die sich axial erstreckende Wand des Blattadapters am ersten Ende innerhalb des Lochkreises am ersten Ende befindet, während diese Wand am zweiten Ende außerhalb des dortigen Lochkreises verläuft, ergibt sich im Querschnitt durch den Blattadapter eine Z-ähnlich Form mit der Wand des Blattadapters und den beiden Lochkreisen. Es hat sich gezeigt, dass eine entsprechende Z-Form für die Krafteinleitung von Gewichts- und Windkräften von den Rotorblättern auf die Rotornabe besonders vorteilhaft ist, insbesondere im Hinblick auf eine gleichmäßige Verteilung der Belastung über den Umfang des Blattadapters. Darüber hinaus bietet die Lage des Lochkreises am zweiten Ende innerhalb der Wand des Blattadapters den Vorteil, dass - sofern der Blattadapter wie beansprucht hohl ist - eine über den Lochkreis am zweiten Ende hergestellte Verbindung zwischen Rotorblatt und Blattadapter vom Innern der Rotornabe aus zugänglich ist, was eine einfache Montage und Wartung dieser Verbindung ermöglicht.

Bei der beschriebenen Z-Form des Blattadapters ist der halbe Öffnungswinkel des dem ersten Ende nächstliegenden kegelstumpfförmigen Abschnitt der Wand des Blattadapters vorzugsweise derart gewählt, dass bei einer Verbindung des ersten Endes des Blattadapters mit dem Außenring eines Wälzlagers zur Rotorblattdrehung, die Fortsetzung der Mittelfläche der Wand des Blattadapters in diesem kegelstumpfförmigen Abschnitt durch die Wälzkörper des Wälzlagers führt. Ist die kegelstumpfförmige Wand des Blattadapters entsprechend ausgestaltet, wird dadurch sichergestellt, dass der Hauptkraftfluss vom Rotorblatt zur Rotornabe unmittelbar durch die Wälzkörper des Wälzlagers führt, sodass ungünstige Belastungen insbesondere auf den Außenring des Wälzlagers, die im Extremfall zu einem erhöhten Verschleiß bzw. einer reduzierten Lebensdauer des Wälzlagers führen können, vermieden werden.

In einer alternativen , nicht beanspruchten, Ausführung ist die Wand des Blattadapters derart ausgestaltet ist, dass die Außenseite der Wand außerhalb der Lochkreise am ersten und zweiten Ende verläuft. Im Querschnitt durch den Blattadapter ergibt sich dadurch eine C-ähnliche Form mit der Wand des Blattadapters und den beiden Lochkreisen. Diese Formgebung bietet den Vorteil, dass - insbesondere sofern beide Lochkreise mit Durchgangslöchern ausgebildet sind - eine über einen der Lochkreise hergestellte oder herzustellende Verbindung zwischen Rotorblatt bzw. Rotornabe und Blattadapter vom Innern des Blattadapters und damit von der Rotornabe aus zugänglich ist, was eine einfache Montage und Wartung dieser Verbindung ermöglicht.

Bei der beschriebenen C-Form des Blattadapters ist bevorzugt, wenn der dem ersten Ende nächstliegende Abschnitt der Wand des Blattadapters derart ausgestaltet ist, dass bei einer Verbindung des ersten Endes des Blattadapters mit dem Innenring des Rotorblattlagers, die Fortsetzung der Mittelfläche der Wand des Blattadapters in diesem Abschnitt durch die Wälzkörper des Wälzlagers führt. Dadurch wird sichergestellt, dass der Hauptkraftfluss vom Rotorblatt zur Rotornabe unmittelbar durch die Wälzkörper des Wälzlagers führt, sodass ungünstige Belastungen auf das Wälzlager vermieden werden.

Unabhängig von der Querschnittsform können im Bereich der Lochkreise Versteifungen auf der Innenseite der Wand vorgesehen sein, mit der die Steifigkeit des Blattadapters gezielt weiter erhöht werden kann. Die Versteifungen können dabei sich in axialer Richtung des Blattadapters erstreckende Rippen und/oder in einer senkrecht zur Achse des Blattadapters verlaufende Versteifungsringe umfassen. In axialer Richtung des Blattadapters erstreckende Rippen können allgemein den Kraftfluss im Blattadapter, bei Anordnung im Bereich des ersten Endes des Blattadapters den Kraftfluss vom Blattadapter in die Rotornabe bzw. ein dort vorgesehenen Rotorblattlager verbessern. Ein senkrecht zur Achse des Blattadapters verlaufender Versteifungsring kann insbesondere bei Anordnung an einem Ende des Blattadapters einer Verformung des Lochkreises am jeweiligen Ende aufgrund von Belastung entgegenwirken.

Vorzugsweise kann im Bereich eines wenigstens eines Lochkreises die Wand des Blattadapters aufgedickt sein, wobei die Wand vorzugsweise auf der von dem Lochkreis abgewandten Seite aufgedickt. In anderen Worten weist die Wand in Bereich des betreffenden Lochkreises eine größere Wanddicke auf, wobei sich die Vergrößerung der Wanddicke vorzugsweise auf der von dem Lochkreis abgewandten Seite der Wand zeigt. Durch eine entsprechende Aufdickung können die Hebelverhältnisse für die durch den Lochkreis geführten Schrauben oder Bolzen verbessert und Belastungsspitzen reduziert werden.

Innerhalb des Blattadapters kann weiterhin wenigstens eine senkrecht zur Achse des Blattadapters verlaufende kreisförmige Plattform mit einer Öffnung vorgesehen sein, die umlaufend an der Wand anliegt und deren Öffnung vorzugsweise durch ein Deckelelement wahlweise verschließbar ist. Die Öffnung kann zentral angeordnet sein, sodass sich eine ringförmige Plattform ergibt. Die Plattform dient einerseits als Arbeitsplattform, bspw. für die Herstellung und/oder Wartung einer Verbindung mit einem Rotorblatt am zweiten Ende des Blattadapters. Andererseits dient sie aufgrund der wahlweisen Verschließbarkeit durch das Deckelelement als Schutz, dass keine festen Partikel, wie bspw. Klebstoffreste, oder Kondenswasser aus dem Innern des Rotorblatts in die Rotornabe gelangen können. Die Plattform kann bspw. auf dafür vorgesehenen Auflageflächen oder Befestigungsöffnungen an der Wand des Blattadapters befestigt sein.

Die Bohrungen wenigstens eines Lochkreises können als Durchgangslöcher oder Sacklöcher ausgestaltet sein. Insbesondere wenn die Bohrungen als Sacklöcher ausgeführt sind, sind diese vorzugsweise mit einem Innengewinde versehen.

Die Lochkreise sind auf mit der Wand des Blattadapters verbundenen L-Flansche angeordnet. Der Blattadapter kann als Gussbauteil oder als Schweißkonstruktion ausgeführt sein. Im erstgenannten Fall werden die L-Flansche einstückig mit der Wand des Blattadapters ausgebildet, im anderen Fall können die L-Flansche an die Wand des Blattadapters angeschweißt werden. Der Blattadapter ist vorzugsweise aus Stahl gefertigt.

Bei der erfindungsgemäßen Windenergieanlage sind zwischen der Rotornabe und den einzelnen Rotorblättern jeweils Blattadapter vorgesehen. Diese sind mit ihrem ersten Ende mit der Rotornabe, mit ihrem zweiten Ende mit der Blattwurzel des jeweiligen Rotorblatts verbunden, sodass sich die vorstehend erwähnten Vorteile ergeben oder zumindest grundsätzlich ergeben können.

Die Rotorblätter der Windenergieanlage sind dabei jeweils um eine Rotorachse drehbar an der Rotornabe gelagert. Aufgrund der mit einem erfindungsgemäßen Blattadapter erreichbaren Steifigkeit im Bereich der Anbindung, die regelmäßig deutlich über der Steifigkeit eines Rotorblatts im Bereich seiner Blattwurzel liegt, können die auf das Rotorblattlager einwirkenden Kräfte gleichmäßiger über den Umfang verteilt werden, sodass Belastungsspitzen im Rotorblattlager reduziert werden können.

Insbesondere bei einem Blattadapter mit einem Z-förmige Querschnitt, wie oben beschrieben, sind die Rotorblattadapter vorzugsweise jeweils mit ihrem ersten Ende mit dem Außenring der dafür vorgesehenen Wälzlager an der Rotornabe verbunden.

Die Erfindung wird nun anhand vorteilhafter Ausführungsformen unter Bezugnahme auf die beigefügten Zeichnungen beispielhaft beschrieben. Es zeigen:
Figur 1: eine schematische Darstellung einer erfindungsgemäßen Windenergieanlage mit Blattadaptern;
Figur 2: eine Schnittansicht durch den Rotor aus Figur 1 entlang der Schnittlinie II-II aus Figur 1;
Figur 3: eine schematische Darstellung einer Ausführungsvariante zum Blattadapter aus Figuren 1 und 2;
Figur 4: eine Schnittansicht eines zweiten Ausführungsbeispiels eines Blattadapters;
Figur 5a-c: verschiedene Ansichten eines dritten Ausführungsbeispiels eines Blattadapters; und
Figur 6: eine Detaildarstellung einer Ausgestaltungsvariante des Flansches am ersten und/oder zweiten Ende eines Blattadapters.

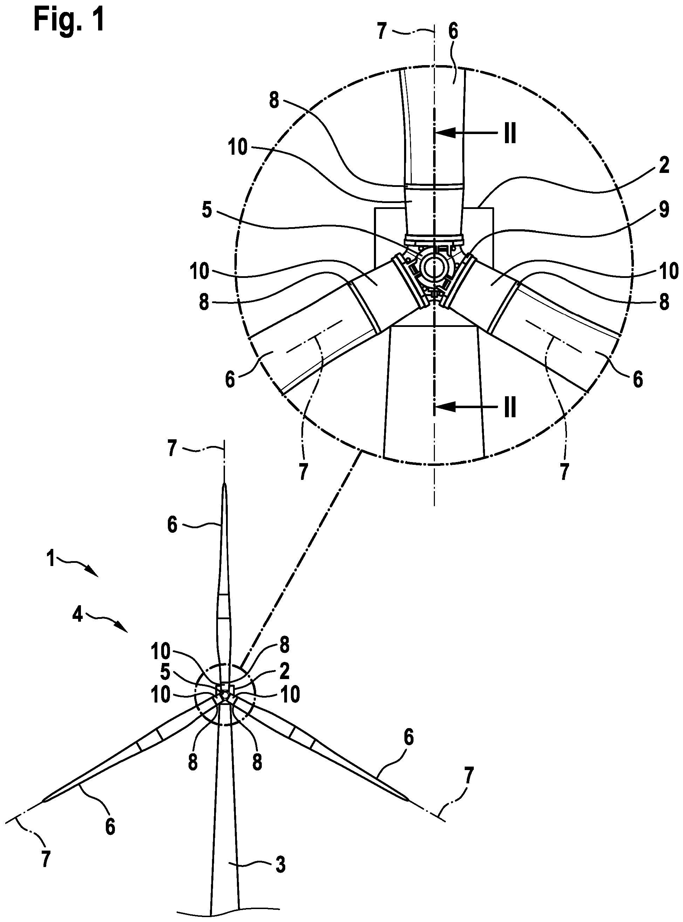

In Figur 1 ist schematisch eine erfindungsgemäße Windenergieanlage 1 dargestellt. Die Windenergieanlage 1 umfasst einen Rotor 4, der drehbar um eine Rotorachse senkrecht zur Blattachse an einer Gondel 2 angeordnet ist und einen in der Gondel 2 befindlichen Generator (nicht dargestellt) antreiben kann. Die Gondel 2 ist zur Veränderung der Azimutausrichtung des Rotors 4 drehbar um eine senkrechte Achse auf dem Turm 3 angeordnet.

Der Rotor 4 umfasst drei, an einer Rotornabe 5 befestige Rotorblätter 6, die jeweils um eine Rotorblattachse 7 zur Einstellung des Blattanstellwinkels drehbar sind. Zwischen der jeweiligen Blattwurzel 8 der Rotorblätter 6 und der Rotornabe 5 sind Blattadapter 10 vorgesehen.

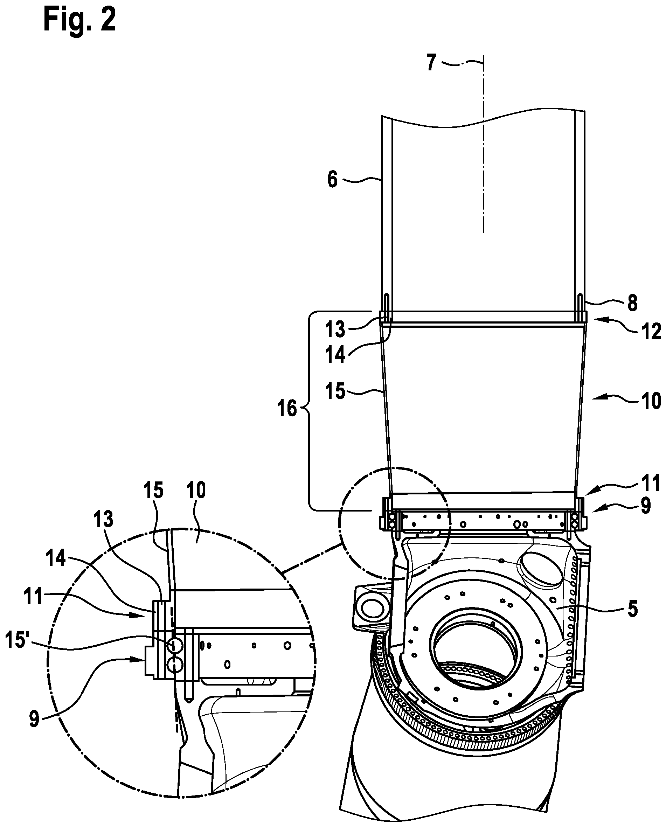

Die Blattadapter 10 werden nun anhand der Figur 2, welche exemplarisch den Blattadapter 10 des in Figur 1 nach oben weisenden Rotorblatts 7 im Schnitt zeigt, näher erläutert. Die anderen Blattadapter 10 sind dazu identisch ausgeführt.

Der Blattadapter 10 weist sowohl an seinem ersten Ende 11 als auch an seinem zweiten Ende 12 jeweils einen Lochkreis 13 auf. Über den Lochkreis 13 an seinem ersten Ende ist der Blattadapter 10 mit der Rotornabe 5, genauer mit dem Außenring des Rotorblattlagers 9, welches die Drehung um die Rotorblattachse 7 ermöglicht, verbunden. Das Rotorblattlager 9 ist als Wälzlager ausgebildet. Im dargestellten Ausführungsbeispiel ist das Rotorblattlager 9 ein zweireihiges Kugellager.

Die beiden Lochkreise 13 sind zueinander identisch ausgeführt, d.h. neben einem identischen Durchmesser weisen sie auch identische Bohrdurchmesser, Anzahl der Bohrungen und Stellung der Bohrungen auf. Dies bietet den Vorteil, dass das in Figuren 1 und 2 dargestellte Rotorblatt 6 bei Bedarf auch ohne Blattadapter 10 an der Rotornabe 5 befestigt werden kann, sodass für eine entsprechende Windenergieanlagenkonfiguration keine gesonderten Rotorblätter 6 oder Rotornaben 5 erforderlich sind. Die Bohrungen beider Lochkreise 13 sind als Durchgangslöcher ausgestaltet.

Die beiden Lochkreise 13 sind jeweils auf L-Flanschen 14 angeordnet, wobei der Lochkreis 13 am zweiten Ende 12 ausgehend von der Wand 15 des Blattadapters 10 jedoch nach innen, der Lochkreis 13 am ersten Ende 11 nach außen gerichtet ist. Aufgrund des identischen Durchmessers der Lochkreise 13 lässt sich dies nur bewerkstelligen, indem die Wand 15 des Blattadapters 10 in einem Abschnitt 16 kegelstumpfförmig ausgestaltet ist, wobei sich die Wand 15 des Blattadapter 10 in diesem Abschnitt 16 ausgehend von der Rotornabe 5 nach außen hin weitet. Der kegelstumpfförmige Abschnitt 16 erstreckt sich praktisch über die gesamte Länge des Blattadapters 10.

Durch den kegelstumpfförmigen Abschnitt 16 der Wand 15 des Blattadapters 10 ergibt sich eine hohe Steifigkeit, sodass von dem Rotorblatt 6 herrührende Belastungen gleichmäßig über den Umfang des Blattadapters 10 verteilt in das Rotorblattlager 9 eingetragen werden. Bei dem in Figur 2 dargestellten Blattadapter 10 ist darüber hinaus der halbe Öffnungswinkel des kegelstumpfförmigen Abschnitts 16 der Wand 15, der dem ersten Ende 11 des Blattadapters 10 am nächsten ist, derart gewählt, dass bei einer Verbindung mit dem Außenring des Rotorblattlagers 9, die Fortsetzung der Mittelfläche der Wand 15 des Blattadapters 10 in diesem Abschnitt 16 (in Figur 2 durch die gestrichelte Linie 15' dargestellt) durch die Wälzkörper des Rotorblattlagers 9 führt. Dadurch wird die Belastung des Rotorblattlagers 9 weiter reduziert.

Nicht zuletzt ist, da der Lochkreis 13 bzw. der Flansch 14 am zweiten Ende 12 nach innen gerichtet ist, sind die Bolzen- oder Schraubenverbindungen zwischen Rotorblatt 6 und Blattadapter 10 vom Inneren der Rotornabe 5 bzw. des Blattadapters 10 zugänglich, was die Herstellung und Wartung eben dieser Verbindung stark vereinfacht. Die außenliegende Verbindung am ersten Ende 11 des Blattadapters 10 lässt sich aufgrund der unmittelbaren Nähe zur Rotornabe 5 ebenfalls gut herstellen bzw. warten.

Der Blattadapter 10 aus Figuren 1 und 2 ist als Gussteil aus Stahl hergestellt. Es ist aber grundsätzlich auch möglich, den Blattadapter 10 als Schweißkonstruktion zu fertigen.

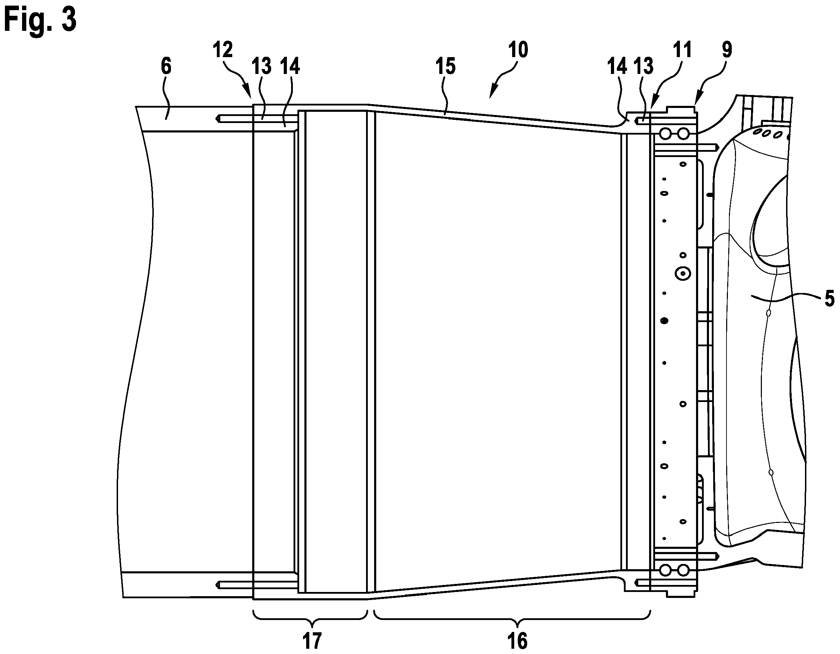

In Figur 3 ist eine Ausführungsvariante zum Blattadapter 10 aus Figuren 1 und 2 gezeigt. Da der Blattadapter 10 in Figur 3 in weiten Teilen demjenigen aus Figuren 1 und 2 gleicht, wird auf die obigen Ausführungen verwiesen und nachfolgend lediglich auf die Unterschiede eingegangen.

Der kegelstumpfförmige Abschnitt 16 erstreckt sich bei dieser Ausführungsvariante nicht über die gesamte Länge des Blattadapters. Vielmehr ist im Bereich des zweiten Endes 12 ein zylindrischer Abschnitt 17 vorgesehen, um auf der Innenseite der Wand 15 ausreichend Platz zu schaffen, um Schrauben bzw. Bolzen durch die Öffnungen des Lochkreises 13 führen und mit entsprechenden Werkzeugen befestigen zu können. Dass der kegelstumpfförmige Abschnitt 16 aber den weit überwiegenden Teil der Länge des Blattadapters 10 ausmacht und darüber hinaus noch zum ersten Ende 11 des Blattadapters 10 benachbart ist, bleiben die von dem Ausführungsbeispiel gemäß Figuren 1 und 2 bekannten Vorteile der erhöhten Steifigkeit des Blattadapters 10 sowie der verbesserten Krafteinleitung in das Rotorblattlager 9 erhalten.

Die Bohrungen des Lochkreises 13 am ersten Ende 11 des Blattadapters 10 sind als Sacklöcher ausgestaltet und weisen ein Innengewinde auf. Die Verbindung zwischen Rotornabe 5 und Blattadapter 10 erfolgt demnach mit einer Stiftschraube bzw. einem Stiftbolzen, und nicht mit einer durchgehenden Schraube bzw. einem durchgehenden Bolzen. Dennoch sind die Lochkreise 13 derart aufeinander abgestimmt, dass auch hier eine unmittelbare Verbindung von Rotornabe 5 und Rotorblatt 6 - unter Weglassung des Blattadapters - möglich ist.

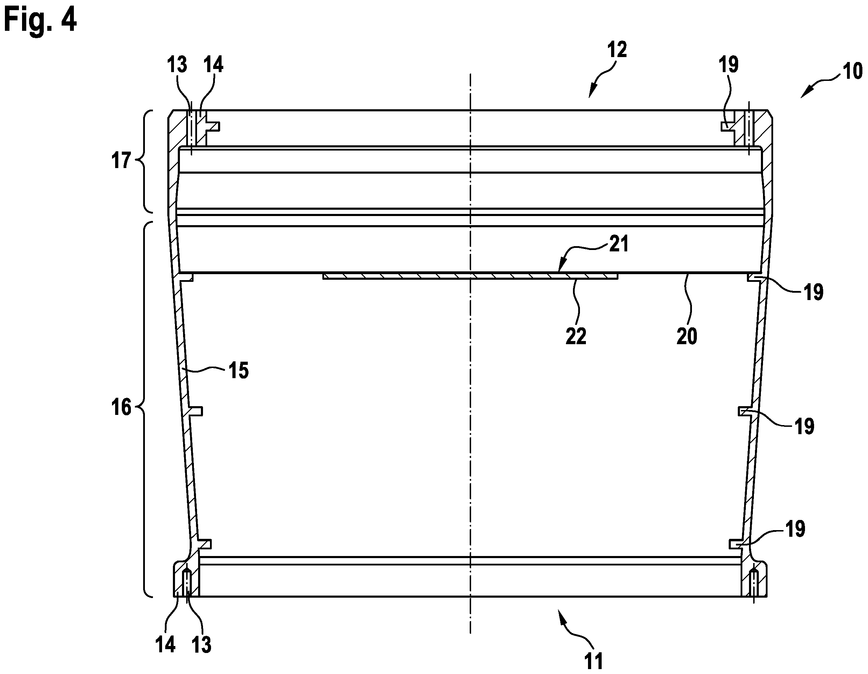

In Figur 4 ist ein weiteres Ausführungsbeispiel eines Blattadapters 10 dargestellt. Der Blattadapter 10 ist dabei vergleichbar zu demjenigen aus Figur 3 aufgebaut, weshalb auf die diesbezüglichen Ausführungen verwiesen wird. Insbesondere weist der Blattadapter 10 neben einem erfindungsgemäß wesentlichen kegelstumpfförmigen Abschnitt 16 einen zylindrischen Abschnitt 17 auf.

An der Innenseite der Wand 15 sind weiterhin auf verschiedenen Höhen umlaufende Auflagen 19 vorgesehen, auf denen sich jeweils eine ringförmige Plattform 20 derart befestigen lässt, dass diese senkrecht zur Achse des Blattadapters 10 verläuft. Die Plattform 20 erstreckt sich dabei bis zur Wand 15 und weist eine zentrale Öffnung 21 auf. Diese zentrale Öffnung 21 ist durch ein Deckelelement 22 wahlweise verschließbar. Sofern eine Verbindung am Lochkreis 13 am zweiten Ende 12 des Blattadapters 10 hergestellt oder überprüft werden muss, lässt sich das Deckelelement 22 entfernen, um so die zentrale Öffnung 21 als Durchstieg für einen Monteur freizugegeben, der sich wiederum auf der Plattform 20 bewegen kann. Andernfalls verschließt das Deckelelement 22 die Öffnung 21 um Hindurchfallen fester Partikel, wie bspw. Klebstoffreste, oder Kondenswasser aus dem Innern des Rotorblatts in die Rotornabe zu verhindern.

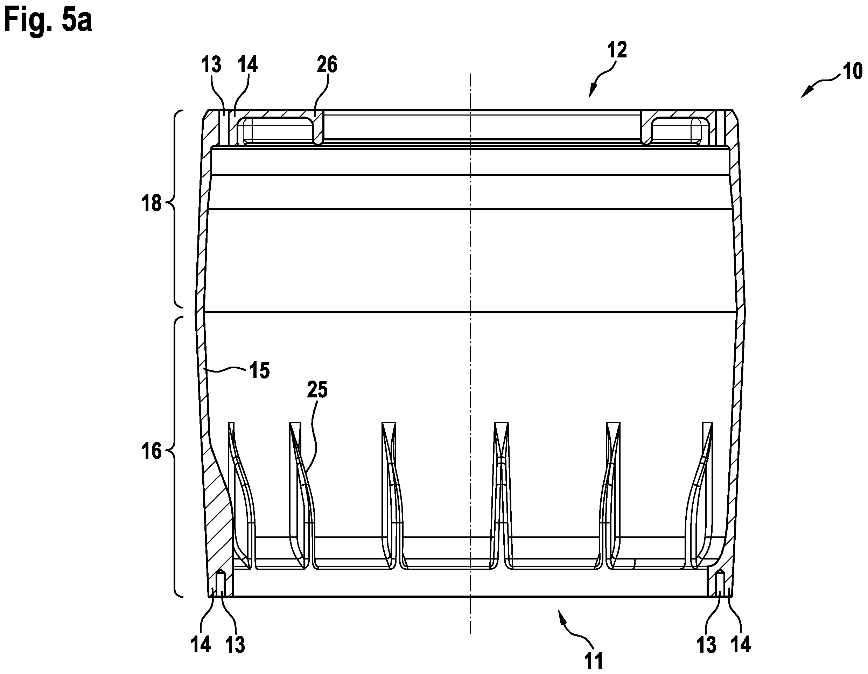

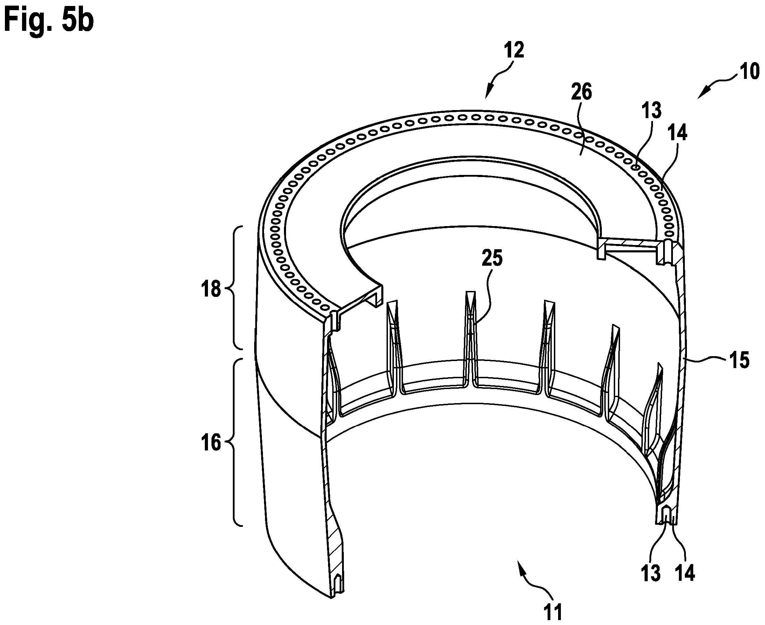

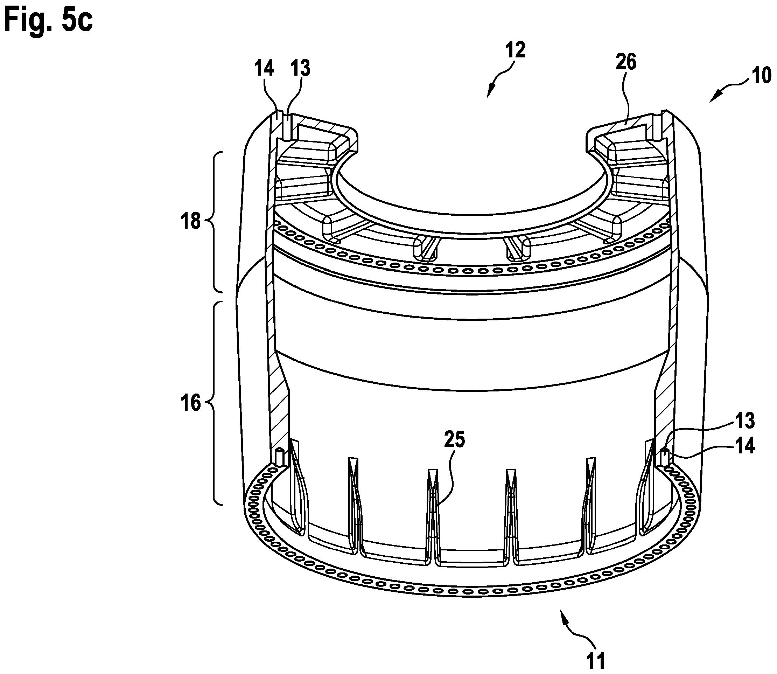

Bei dem Blattadapter 10 in Figuren 5a-c verläuft die Wand 15 bzw. insbesondere deren Außenseite - in Abweichung von den vorangegangenen Ausführungsbeispielen - außerhalb der Lochkreise 13 sowohl am ersten Ende 11 als auch am zweiten Ende 12 (C-ähnliche Form). Darüber hinaus ist zwar selbstverständlich ein kegelstumpfförmiger Abschnitt 16 vorgesehen, in dem sich die Wand 15 ausgehend vom ersten Ende 11 zum zweiten Ende hin 12 weitet, allerdings ist die Wand 15 im übrigen Abschnitt 18 derart konusförmig ausgestaltet, dass die Aufweitung aus den ersten Abschnitt 16 wieder teilweise zurückgenommen wird. Diese doppelte Konusform ist für die Herstellung des Blattadapters 10 in einem Gießverfahren besonders vorteilhaft. Darüber hinaus sind im Bereich der beiden Enden 11, 12 des Blattadapters 10 noch Versteifungen vorgesehen. Am ersten Ende 11 ist die Versteifung durch eine Vielzahl von axial verlaufenden Rippen 25 erreicht, am zweiten Ende 12 ist ein senkrecht zur Achse des Blattadapters 10 verlaufender Versteifungsring 26, in diesem Beispiel in Form einer wagenradähnlichen Geometrie, vorgesehen.

Der Versteifungsring 26 am zweiten Ende 12 erhöht die Steifigkeit für die Anbindung eines Rotorblatts 6. Die Rippen 25 sorgen für ausreichende Steifigkeit bei Anschluss des Blattadapters 10 bspw. an den Außenring eines Rotorblattlagers 9, also insbesondere wenn die Fortsetzung der Mittelfläche der Wand 15 des Blattadapters 10 im dem ersten Ende 11 benachbarten Abschnitt 16 nicht unmittelbar durch die Wälzkörper des Rotorblattlagers 9 führt. Wird der Blattadapter 10 mit dem Innenring eines Rotorblattlagers 9 verbunden, kann auf eine entsprechende Versteifung ggf. aber auch verzichtet werden, da in diesem Fall - analog zu Detailzeichnung in Figur 3 - die Fortsetzung der Mittelfläche der Wand 15 des Blattadapters 10 im dem ersten Ende 11 benachbarten Abschnitt 16 durch die Wälzkörper des Rotorblattlagers 9 führen kann. Dadurch wird sichergestellt, dass der Hauptkraftfluss vom Rotorblatt 6 zur Rotornabe 5 unmittelbar durch die Wälzkörper des Rotorblattlagers 9 führt, sodass auch ohne das Vorsehen von Rippen 25 bereits ungünstige Belastungen auf das Rotorblattlager 9 vermieden werden.

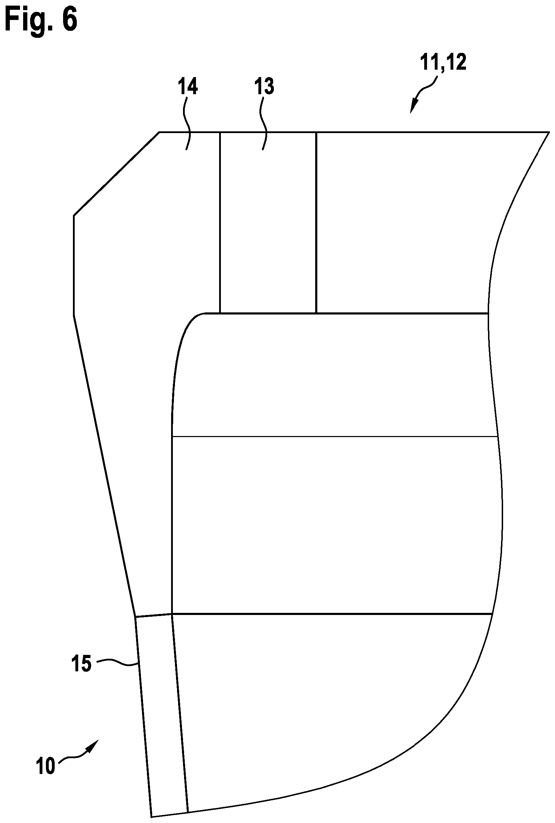

In Figur 6 ist eine Ausgestaltungsvariante der Wand 15 im Bereich des Flansches 14 an einem Ende eines Blattadapters 10 gezeigt, wobei diese Ausgestaltungsvariante an dem ersten Ende 11 und/oder zweiten Ende 12 des Blattadapters 10 vorgesehen werden kann. Gemäß dieser Ausgestaltungsvariante ist die in dem fraglichen Bereich zylindrisch verlaufende Wand 15 auf der von dem daran angeordneten Flansch 14 bzw. dem darin gebildeten Lochkreis 13 abgewandten Seite aufgedickt, wodurch sich günstigere Hebelverhältnisse für die durch den Lochkreis 13 geführten Schrauben oder Bolzen ergeben und sich eine deutliche Reduktion der Belastungsspitzen erreichen lässt. In Figur 6 ist die Aufdickung für einen gegenüber der Wand 15 des Blattadapters 10 innenliegenden Lochkreis 13 dargestellt, bei dem die Aufdickung also an der Außenseite des Blattadapters 10 befindet. Es ist aber auch möglich, die Aufdickung anders auszugestalten, bspw. bei einem außenliegenden Lochkreis 13 die Aufdickung auf der Innenseite des Blattadapters 10 vorzusehen.

## Patentansprüche

1. Windenergieanlage (1) mit einem um eine im Wesentlichen horizontalen Achse drehbaren Rotor (4) umfassend wenigstens zwei an einer Rotornabe (5) befestigten Rotorblättern (6), wobei zwischen Rotornabe (5) und den einzelnen Rotorblättern (6) jeweils ein Blattadapter (10) für Rotorblätter (6) von Windenergieanlagen (1) zur Vergrößerung des Rotordurchmessers vorgesehen ist, mit einem ersten Ende (11) zur Befestigung an der Rotornabe (5) und einem in axialer Richtung beabstandeten zweiten Ende (12) zur Verbindung mit der Blattwurzel (8) eines Rotorblatts (6), wobei der Blattadapter (10) an seinem ersten und zweiten Ende (11, 12) jeweils einen Lochkreis (13) zur Verbindung mit der Rotornabe (5) oder dem Rotorblatt (6) aufweist, wobei die in axialer Richtung erstreckende Wand (15) des Blattadapters (10) vom ersten Ende (11) hin zum zweiten Ende (12) in wenigstens einem Abschnitt (16) kegelstumpfförmig nach außen hin öffnend ist und die Wand (15) des Blattadapters (10) derart ausgestaltet ist, dass die sich in axialer Richtung erstreckende Wand (15) des Blattadapters (10) am ersten Ende (11) innerhalb des Lochkreises (13) am ersten Ende (11) und am zweiten Ende (12) außerhalb des Lochkreises (13) am zweiten Ende (12) verläuft, wobei der Querschnitt durch den Blattadapter (10) eine Z-ähnliche Form mit der Wand (15) des Blattadapters und den beiden Lochkreisen (13) aufweist, wobei die Lochkreise (13) auf mit der Wand (15) des Blattadapters (10) fest verbundener L-Flansche (14) angeordnet sind, und wobei der Blattadapter (10) hohl ist und eine über den Lochkreis (13) am zweiten Ende (12) hergestellte Verbindung zwischen Rotorblatt (6) und Blattadapter (10) vom Innern der Rotornabe (5) aus zugänglich ist.

2. Windenergieanlage nach Anspruch 1, **dadurch gekennzeichnet, dass** die Gesamtlänge der kegelstumpfförmigen Abschnitte (16), in denen die Wand (15) des Blattadapters (10) nach außen hin öffnend ist, größer oder gleich der Gesamtlänge der übrigen Abschnitte (17, 18) ist.

3. Windenergieanlage nach Anspruch 1, **dadurch gekennzeichnet, dass** die beiden Lochkreise (13) einen identischen Durchmesser aufweisen, vorzugsweise weiterhin einen identischen Durchmesser der Bohrungen, eine identische Anzahl
der Bohrungen und/oder eine identische Stellung der Bohrungen aufweisen.

4. Windenergieanlage nach einem der vorhergehenden Ansprüche,
**dadurch gekennzeichnet, dass** im Bereich wenigstens eines Lochkreises (13) Versteifungen (25, 26) auf der Innenseite der Wand (15) vorgesehen sind, die vorzugsweise als in axialer Richtung erstreckende Rippen (25) und/oder in einer senkrecht zur Achse des Blattadapters (10) verlaufende Versteifungsringe (26) umfassen.

5. Windenergieanlage nach einem der vorhergehenden Ansprüche,
**dadurch gekennzeichnet, dass** im Bereich wenigstens eines Lochkreises (13) die Wand (15) aufgedickt ist, wobei die Wand (15) vorzugsweise auf der von dem Lochkreis (13) abgewandten Seite aufgedickt ist.

6. Windenergieanlage nach einem der vorhergehenden Ansprüche,
**dadurch gekennzeichnet, dass** innerhalb des Blattadapters (10) wenigstens eine senkrecht zur Achse des Blattadapters (10) verlaufende kreisförmige Plattform (20) mit einer Öffnung (21) vorgesehen ist, die umlaufend an der Wand (15) anliegt und deren zentrale Öffnung (21) vorzugsweise durch ein Deckelelement (22) wahlweise verschließbar ist.

7. Windenergieanlage nach einem der vorhergehenden Ansprüche,
**dadurch gekennzeichnet, dass** die Bohrungen wenigstens eines Lochkreises (13) als Durchgangslöcher oder Sacklöcher ausgestaltet sind, wobei die Bohrungen vorzugsweise mit einem Innengewinde versehen sind.

8. Windenergieanlage nach einem der vorhergehenden Ansprüche,
**dadurch gekennzeichnet, dass** der Blattadapter (10) als Gussbauteil oder als Schweißkonstruktion ausgeführt ist.

9. Windenergieanlage nach einem der vorhergehenden Ansprüche, **dadurch gekennzeichnet, dass** die Rotorblätter (6) jeweils um eine Rotorachse (7) drehbar an der Rotornabe (5) gelagert sind, wobei die Rotorblattadapter (10) vorzugsweise jeweils mit ihrem ersten Ende (11) mit einem Außen- oder Innenring der dafür vorgesehenen Rotorblattlager (9) an der Rotornabe (5) verbunden sind.

10. Windenergieanlage nach Anspruch 9, **dadurch gekennzeichnet, dass** der halbe Öffnungswinkel des dem ersten Ende (11) nächstliegenden kegelstumpfförmigen Abschnitts (16) der Wand (15) des Blattadapters (10) derart gewählt ist, dass bei einer Verbindung des ersten Endes (11) des Blattadapters (10) mit dem Außenring des Rotorblattlagers (9), die Fortsetzung (15') der Mittelfläche der Wand (15) des Blattadapters (10) in diesem kegelstumpfförmigen Abschnitt (16) durch Wälzkörper des Rotorblattlagers (9) führt.

## Claims

1. Wind turbine (1) having a rotor (4) which is rotatable about a substantially horizontal axis and which comprises at least two rotor blades (6) which are fastened to a rotor hub (5), wherein, between the rotor hub (5) and the individual rotor blades (6), provision is made in each case of a blade adaptor (10) for rotor blades (6) of wind turbines (1) for increasing the rotor diameter, said blade adaptor having a first end (11) for fastening to the rotor hub (5) and having an axially spaced-apart second end (12) for connection to the blade root (8) of a rotor blade (6), wherein, at its first and second ends (11, 12), the blade adaptor (10) has in each case one hole circle (13) for connection to the rotor hub (5) or to the rotor blade (6), wherein the axially extending wall (15) of the blade adaptor (10) opens, from the first end (11) towards the second end (12), frustoconically outwards in at least one section (16) and the wall (15) of the blade adaptor (10) is configured in such a way that the axially extending wall (15) of the blade adaptor (10), at the first end (11), extends within the hole circle (13) at the first end (11) and, at the second end (12), extends outside the hole circle (13) at the second end (12), wherein the cross section through the blade adaptor (10) has, with the wall (15) of the blade adaptor and the two hole circles (13), a Z-like shape, wherein the hole circles (13) are arranged on L-flanges (14) which are connected fixedly to the wall (15) of the blade adaptor (10), and wherein the blade adaptor (10) is hollow and a connection, produced at the second end (12) via the hole circle (13), between rotor blade (6) and blade adaptor (10) is accessible from the interior of the rotor hub (5).

2. Wind turbine according to Claim 1, **characterized in that** the total length of the frustoconical sections (16), in which the wall (15) of the blade adaptor (10) is outwardly open, is greater than or equal to the total length of the remaining sections (17, 18).

3. Wind turbine according to Claim 1, **characterized in that** the two hole circles (13) have an identical diameter, preferably furthermore an identical diameter of the bores, an identical number of bores and/or an identical position of the bores.

4. Wind turbine according to one of the preceding claims, **characterized in that**, in the region of at least one hole circle (13), provision is made on the inner side of the wall (15) of stiffening means (25, 26), which preferably comprise ribs (25) extending in the axial direction and/or stiffening rings (26) extending perpendicularly to the axis of the blade adaptor (10).

5. Wind turbine according to one of the preceding claims, **characterized in that**, in the region of at least one hole circle (13), the wall (15) is thickened, wherein the wall (15) is preferably thickened on the side which faces away from the hole circle (13).

6. Wind turbine according to one of the preceding claims, **characterized in that**, within the blade adaptor (10), provision is made of at least one circular platform (20) with an opening (21), which extends perpendicularly to the axis of the blade adaptor (10) and which bears circumferentially against the wall (15) and whose central opening (21) can preferably be optionally closed off by a cover element (22).

7. Wind turbine according to one of the preceding claims, **characterized in that** the bores of at least one bore circle (13) are in the form of through-holes or blind holes, wherein the bores are preferably provided with an internal thread.

8. Wind turbine according to one of the preceding claims, **characterized in that** the blade adaptor (10) is in the form of a cast component or in the form of a welded construction.

9. Wind turbine according to one of the preceding claims, **characterized in that** the rotor blades (6) are each mounted on the rotor hub (5) so as to be rotatable about a rotor axis (7), wherein the rotor-blade adaptors (10) are preferably in each case connected by way of their first end (11) to an outer ring or inner ring of the rotor-blade bearings (9), provided for this purpose, on the rotor hub (5).

10. Wind turbine according to Claim 9, **characterized in that** the half opening angle of that frustoconical section (16) of the wall (15) of the blade adaptor (10) which is closest to the first end (11) is selected in such a way that, in the case of a connection of the first end (11) of the blade adaptor (10) to the outer ring of the rotor-blade bearing (9), the extension (15') of the mid-surface of the wall (15) of the blade adaptor (10) in this frustoconical section (16) passes through rolling bodies of the rotor-blade bearing (9).

## Revendications

1. Éolienne (1) comportant un rotor (4) pouvant tourner autour d'un axe sensiblement horizontal et comprenant au moins deux pales de rotor (6) fixées à un moyeu de rotor (5),
un adaptateur de pale (10) pour des pales de rotor (6) d'éoliennes (1) étant prévu entre le moyeu de rotor (5) et les pales de rotor (6) individuelles pour l'augmentation du diamètre de rotor, comportant une première extrémité (11) servant à la fixation au moyeu de rotor (5) et une deuxième extrémité (12) espacée dans la direction axiale et servant à la connexion au pied de pale (8) d'une pale de rotor (6), l'adaptateur de pale (10) présentant à sa première et sa deuxième extrémité (11, 12) respectivement un cercle de trous (13) servant à la connexion au moyeu de rotor (5) ou à la pale de rotor (6), la paroi (15), s'étendant dans la direction axiale, de l'adaptateur de pale (10) s'ouvrant vers l'extérieur en forme de tronc de cône dans au moins une partie (16) à partir de la première extrémité (11) vers la deuxième extrémité (12) et la paroi (15) de l'adaptateur de pale (10) étant configurée de telle sorte que la paroi (15), s'étendant dans la direction axiale, de l'adaptateur de pale (10), à la première extrémité (11), s'étend à l'intérieur du cercle de trous (13) à la première extrémité (11) et, à la deuxième extrémité (12), s'étend à l'extérieur du cercle de trous (13) à la deuxième extrémité (12), la section transversale à travers l'adaptateur de pale (10) présentant une forme similaire à un Z avec la paroi (15) de l'adaptateur de pale et les deux cercles de trous (13), les cercles de trous (13) étant disposés sur des brides en L (14) connectées fixement à la paroi (15) de l'adaptateur de pale (10), et l'adaptateur de pale (10) étant creux et une connexion, produite par le biais du cercle de trous (13) à la deuxième extrémité (12), entre la pale de rotor (6) et l'adaptateur de pale (10) étant accessible depuis l'intérieur du moyeu de rotor (5).

2. Éolienne selon la revendication 1, **caractérisée en ce que** la longueur totale des parties (16) en forme de tronc de cône, dans lesquelles la paroi (15) de l'adaptateur de pale (10) est ouverte vers l'extérieur, est supérieure ou égale à la longueur totale des parties restantes (17, 18) .

3. Éolienne selon la revendication 1, **caractérisée en ce que** les deux cercles de trous (13) présentent un diamètre identique, de préférence présentent en outre un diamètre identique des alésages, un nombre identique d'alésages et/ou une position identique des alésages.

4. Éolienne selon l'une des revendications précédentes, **caractérisée en ce que**, dans la région d'au moins un cercle de trous (13), des raidissements (25, 26) sont prévus sur le côté intérieur de la paroi (15), lesquels comportent de préférence des nervures (25) s'étendant dans la direction axiale et/ou des bagues de raidissement (26) s'étendant perpendiculairement à l'axe de l'adaptateur de pale (10).

5. Éolienne selon l'une des revendications précédentes, **caractérisée en ce que**, dans la région d'au moins un cercle de trous (13), la paroi (15) est plus épaisse, la paroi (15) étant plus épaisse de préférence sur le côté opposé au cercle de trous (13).

6. Éolienne selon l'une des revendications précédentes, **caractérisée en ce qu'**au moins une plate-forme (20) circulaire s'étendant perpendiculairement à l'axe de l'adaptateur de pale (10) est dotée d'une ouverture (21) à l'intérieur de l'adaptateur de pale (10), laquelle ouverture s'appuie de manière périphérique contre la paroi (15) et son ouverture centrale (21) peut être fermée sélectivement de préférence par un élément de couvercle (22) .

7. Éolienne selon l'une des revendications précédentes, **caractérisée en ce que** les alésages d'au moins un cercle de trous (13) sont configurés en tant que trous traversants ou trous borgnes, les alésages étant dotés de préférence d'un filetage intérieur.

8. Éolienne selon l'une des revendications précédentes, **caractérisée en ce que** l'adaptateur de pale (10) est réalisé sous forme de pièce coulée ou sous forme de construction soudée.

9. Éolienne selon l'une des revendications précédentes, **caractérisée en ce que** les pales de rotor (6) sont montées sur le moyeu de rotor (5) de manière à pouvoir tourner respectivement autour d'un axe de rotor (7), l'adaptateur de pale de rotor (10) étant connecté de préférence respectivement par sa première extrémité (11) à une bague extérieure ou intérieure des paliers de pale de rotor (9) prévus à cet effet sur le moyeu de rotor (5).

10. Éolienne selon la revendication 9, **caractérisée en ce que** le demi-angle d'ouverture de la partie (16) en forme de tronc de cône, adjacente à la première extrémité (11), de la paroi (15) de l'adaptateur de pale (10) est sélectionné de telle sorte qu'en cas de connexion de la première extrémité (11) de l'adaptateur de pale (10) à la bague extérieure du palier de pale de rotor (9), le prolongement (15') de la surface centrale de la paroi (15) de l'adaptateur de pale (10) dans cette partie (16) en forme de tronc de cône traverse des corps de roulement du palier de pale de rotor (9).
